# EUROPÄISCHE PATENTSCHRIFT

(11) **EP 1 888 439 B1**
(45) Veröffentlichungstag und Bekanntmachung des Hinweises auf die Patenterteilung: **30.12.2009**
(21) Anmeldenummer: 06753387.7
(22) Anmeldetag: 04.04.2006
(51) Int. Cl.: B65H 19/10

(54) **VORRICHTUNG UND VERFAHREN ZUM VERBINDEN DER ENDEN ZWEIER FLACHLIEGENDER SCHLAUCHBAHNEN**
DEVICE AND METHOD FOR CONNECTING THE ENDS OF TWO FLAT TUBULAR WEBS
DISPOSITIF ET PROCEDE POUR RELIER LES EXTREMITES DE DEUX BANDES DE TUYAU PLANES

(30) Priorität: 20.04.2005 DE 102005018546
(43) Veröffentlichungstag der Anmeldung: 20.02.2008
(73) Patentinhaber: Windmöller & Hölscher KG, 49525 Lengerich/Westf. (DE)
(72) Erfinder: NOBBE, Ludger, 49170 Hagen a. T.W. (DE)
(86) Internationale Anmeldenummer: PCT/EP2006/003453
(87) Internationale Veröffentlichungsnummer: WO 2006/111332

(56) Entgegenhaltungen:
- EP-A- 1 201 585
- WO-A-2005/042347
- DE-A1- 10 240 644
- DE-U1-202004 013 959

## Beschreibung

Die Erfindung betrifft eine Vorrichtung und ein Verfahren zum Verbinden der Enden zweier flachliegender Schlauchbahnen.

Vorrichtungen zur Verarbeitung von Schlauchmaterial ziehen dieses in der Regel von Wickeln ab, auf denen das zu verarbeitende Material in Form von Schlauchbahnen aufgewickelt ist. Solchen Vorrichtungen zur Verarbeitung werden die Schlauchbahnen meist kontinuierlich, fallweise jedoch auch taktweise, zugeführt. Um nach der Verarbeitung sämtlichen Schlauchmaterials, das der Wickel zur Verfügung stellt, nicht den Anfang einer neuen Schlauchbahn in die Verarbeitungsvorrichtung einführen oder einfädeln zu müssen, wird in der Regel das Ende der ersten Schlauchbahn mit dem Anfang der neuen Schlauchbahn, welche ebenfalls als Wickel zur Verfügung gestellt wird, verbunden. Auf diese Weise muss der Betrieb der Vorrichtung zur Verarbeitung von Schlauchmaterial nicht oder nur für eine verschwindend geringe Zeit zwecks Wickelwechsel unterbrochen werden. Eine derartige Vorrichtung ist aus der DE 102 40 644 A1 bekannt.

Die Verbindung von Schlauchbahnen kann dabei durch eine beliebige Verbindungsart erfolgen, beispielsweise durch Kleben. Bestehen die Schlauchbahnen aus Kunststoff, so ist Verschweißen in der Regel die bevorzugte Verbindungsart.

Die genannten Schlauchbahnen, insbesondere solche aus Kunststoff, werden häufig in Vorrichtungen verarbeitet, die nach dem FFS-Prinzip arbeiten. "FFS" steht dabei für "Form, Fill and Seal" (zu deutsch: Formen, Füllen, Schließen).

Eine solche Vorrichtung ist beispielsweise in der Patentschrift DE 199 36 660 C1 der Anmelderin beschrieben.

Eine spezielle Art von Schlauchbahnen sind solche mit Seitenfalten. Solche Seitenfaltenschläuche werden in den genannten FFS-Maschinen bevorzugt verwendet. Bei der Verbindung der Enden zweier Schlauchbahnen ist es dann jedoch wichtig, dass nach dem Verbinden der beiden Schlauchbahnen die Seitenfalten durchlaufend sind. Dieses ist nicht gewährleistet, wenn beispielsweise beide Schlauchbahnen aufeinander liegend verbunden werden. Wiederum in anderen Anwendungsfällen ist es wichtig, dass das Innere des Schlauches, auch im Bereich der Verbindungsstelle, durchgehend ist. Um also die Verbindungsstelle der Enden zweier Schlauchbahnen problemlos in Vorrichtungen zur Verarbeitung solcher Schlauchbahnen verwenden zu können, müssen diese Schlauchbahnen auf besondere Art und Weise verbunden werden.

Zu diesem Zweck schlägt die EP 1 304 214 A1 vor, ein Ende mit den Innenkanten der Seitenfalten auftrennenden Schnitten zu versehen und anschließend das andere Ende in den aufgetrennten Bereich in der Weise einzuschieben oder einzulegen, dass die beiden Wände mit je einer Lage jeder Seitenfalte des Endbereichs der einen Schlauchfolie das andere Ende zwischen sich einfassen. In die Seitenfalten des eingefassten anderen Endbereichs werden Trennschichten eingeschoben oder eingelegt und die Enden dann durch eine Querschweißnaht miteinander verbunden. Auf diese Weise können auch über die Verbindungsstellen hinweg durchlaufende Seitenfalten sichergestellt werden.

Die Patentanmeldung EP 1 201 585 A1 zeigt ein Verfahren zum Verbinden der Enden zweier Schlauchbahnen ohne Seitenfalten. Die nach dem dort dargestellten Verfahren verbundenen Schlauchbahnen sind auch im Bereich der Verbindungsstelle im Inneren durchgehend, so dass für einen Rollenwechsel der Betrieb der Schlauchbahnen verarbeitenden Maschine nicht unterbrochen werden muss, um eine neue Schlauchbahn in die Maschine einzufädeln. Die in der EP 1 201 585 A1 gezeigte Vorrichtung zur Durchführung des Verfahrens umfasst eine Lagereinheit mit mehreren Wickeln oder Rollen, die nebeneinander angeordnet sind. Die Enden der auf diesen Wickeln aufgewickelten Schlauchbahnen sind im Bereich ihrer Seitenkanten eingeschnitten, so dass die oberen und die unteren Wände dieser Schlauchbahnen voneinander getrennt sind. Zwischen diesen oberen und unteren Wänden verläuft ein Riemen, der sich in einer Richtung quer zu den Längsachsen der Schlauchbahnen erstreckt und in dieser Richtung bewegbar ist. Dieser Riemen ist nicht endlos umlaufend, sondern in dem Bereich unterbrochen, in dem die Schlauchbahn, die gerade verarbeitet wird, von dem entsprechenden Wickel abgezogen wird. Die beiden Enden des Riemens sind über einen Hilfsrahmen verbunden, der so konstruiert ist, dass sich im Unterbrechungsbereich des Riemens nur die Schlauchbahn, die gerade verarbeitet wird, befindet. Soll nun der Anfang einer neuen Schlauchbahn mit dem Ende der gerade abgezogenen Schlauch bahn verbunden werden, so wird der Transport der Schlauchbahn zur verarbeitenden Maschine zunächst unterbrochen und die abgezogene Schlauchbahn parallel zu dem Riemen abgeschnitten, so dass das Ende der Schlauchbahn den unterbrochenen Bereich des Riemens überbrückt. Anschließend wird der Riemen angetrieben, bis das Ende der Schlauchbahn so zwischen die obere und untere Wand des Endes der Schlauchbahn eines weiteren Wickels eingeschoben wurde, dass die Längsachsen der alten und der neuen Schlauchbahn miteinander fluchten. Durch diese Querverschiebung des Endes der alten Schlauchbahn und wegen der Unterbrechung des Riemens kommt das Ende der neuen Schlauchbahn unmittelbar in Kontakt mit dem Ende der alten Schlauchbahn. Dabei kommt die obere Wand des Endes der neuen Schlauchbahn auf der oberen Wandung des Endes der alten Schlauchbahn zum Liegen und die untere Wand des Endes der neuen Schlauchbahn auf der unteren Wandung des Endes der alten Schlauchbahn. Schließlich werden die Schlauchbahnen, welche aus Kunststoff bestehen, durch Schweißbacken, die von oben und von unten an die übereinander liegenden Bereiche der Enden der beiden Schlauchbahnen herangeführt werden, miteinander verschweißt. Um zu verhindern, dass dabei auch die obere und untere Wandung des Endes des alten Schlauches ebenfalls miteinander verbunden werden, ist ein innenliegendes Werkzeug mit einem Trennblech vorgesehen. Auf diese Weise bleibt die innere Durchgängigkeit des Schlauches auch über die Verbindungsstelle hinweg erhalten.

Wie zuvor beschrieben, liegt zwischen der oberen und untere Wand des Endes der neuen Schlauchbahnen der Riemen, der vor der Verbindung der Enden der alten und der neuen Schlauchbahn eine Bewegung vollführt, die in Richtung quer zu den Längsachsen der Schlauchbahnen verläuft. Bei der Querbewegung kann der Riemen die obere und die untere Wand jedoch teilweise mitziehen, so dass anschließend die Wände möglicherweise nicht glatt auf den Außenwandungen des Endes der alten Schlauchbahn aufliegen. Dies kann zu einer mangelhaften Verbindung der beiden Enden und damit zu einem Riss der Verbindungsstelle oder zu weiteren Störungen in der die Schlauchbahn verarbeitenden Maschine führen. Insgesamt muss festgestellt werden, dass die genannten Vorrichtungen zu Unzuverlässigkeiten im Verbindungsprozess und qualitativ minderwertigen Verbindungen führen kann.

Die Aufgabe der vorliegenden Erfindung ist es daher, eine Vorrichtung zum Verbinden der Enden zweier flachliegender Schlauchbahnen vorzuschlagen, mit welcher der Verbindungsprozess zuverlässiger durchführbar ist und welche zu qualitativ verbesserten Verbindungen von Schlauchbahnen führt.

Die Aufgabe wird gelöst durch eine Vorrichtung, die neben den Merkmalen des Oberbegriffs des Anspruchs 1 auch die Merkmale des kennzeichnenden Teils des Anspruchs 1 umfasst.

Demnach sind jeweils die obere und die untere Wand des Endes der einen Schlauchbahn durch Mittel zum Führen zumindest teilweise in Richtung der Längsachse der Schlauchbahnen bewegbar.

Dadurch, dass die obere und die untere Wand des Endes der einen Schlauchbahn durch die Mittel zum Führen zumindest teilweise in Richtung der Längsachse der Schlauchbahnen bewegbar sind, können sich diese Wände glatt und eben an die Wandungen des anderen Schlauches anlegen, so dass die Wände der einen Schlauchbahn und die Wandungen der anderen Schlauchbahn planparallel zueinander verlaufen. Bevorzugt ist die Vorrichtung so ausgestaltet, dass die Wände der neuen Schlauchbahn auf die Außenwandungen der endenden Schlauchbahn aufgelegt werden. Selbstverständlich kann aber auch das Ende der endenden Schlauchbahn in eine obere und untere Wand aufgeteilt beziehungsweise aufgetrennt sein, so dass diese Wände auf die Außenwandungen der folgenden Schlauchbahn auflegbar sind. Die Bewegung der Wände kann durch Führungsmittel erfolgen, welche in Längsrichtung der Schlauchbahnen bewegbar sind. Alternativ können auch Haltemittel, beispielsweise Greifer oder Saugelemente vorgesehen werden, die um eine Achse, welche dann bevorzugt quer zu den Längsachsen der Schlauchbahnen verläuft, rotierbar sind. Diese Achse befindet sich bei der Bewegung bevorzugt am Ende der Schnitte, welche eine obere und eine untere Wand des Endes der einen Schlauchbahn definieren, so dass die obere und untere Wand durch eine Klappbewegung, welche naturgemäß auch einen Bewegungsanteil in Längsrichtung der Schlauchbahnen umfasst, auf die Wandungen der anderen Schlauchbahn ablegbar sind.

In vorteilhafter Ausgestaltung der Erfindung sind die Enden der Schlauchbahnen mittels Haltemittel in ortsfesten Positionen haltbar. Diese Haltemittel können als Klemmbacken, aber auch als Sauger ausgestaltet sein. Weitere Haltemittel sind denkbar. Damit wird das Zurückweichen der anderen Schlauchbahn, auf die die Wände aufgelegt werden, vermieden. Während dieser Zeit wird bevorzugt der Produktionsprozess in der eine Schlauchbahn verarbeitenden Maschine angehalten. Es kann jedoch auch ein Bahnspeicher vorgesehen werden, der die Unterbrechung der Produktion vermeidet.

In einer bevorzugter Ausführungsform der Erfindung umfassen die Mittel zur Führung Umlenkmittel, welche parallel zur Längsachse der Schlauchbahnen verschiebbar sind. Dieses ist eine konstruktiv besonders einfache und damit kostengünstige Ausführungsform der vorliegendenden Erfindung. Besonders kostengünstige Umlenkmittel werden geschaffen, wenn diese als Bleche oder Platten ausgeführt werden, welche einen Spalt begrenzen. Die obere beziehungsweise untere Wand wird bei der Bewegung dieser Bleche oder Platten an jeweils einer den Spalt begrenzenden Kante entlang geführt, so dass die Wände auf das Ende der anderen Schlauchbahn umgeklappt werden. Zur Vereinfachung der Herstellung können die Bleche oder Platten als ein Bauteil, beispielsweise eine Blechplatte, ausgeführt werden, in die ein einen Spalt bildendes Langloch eingebracht ist, durch welches die Schlauchbahn verläuft. In einer weiteren Ausführungsform können die Umlenkmittel als Walzen oder Rollen ausgeführt werden. Je eine Walze oder Rolle rollt dann auf der oberen beziehungsweise unteren Wand des Endes der einen Schlauchbahn ab, so dass diese sich an die Außenwandungen der anderen Schlauchbahn anlegen, ohne dass letztere versehentlich verschoben wird. Diese Umlenkmittel können auch als Andrückmittel bezeichnet werden und bleiben so lange mit den Wänden in Kontakt, bis der Verbindungsprozess beendet ist, also beispielsweise bis der verwendete Klebstoff zu Herstellung der Verbindung abgebunden hat oder bis bei der Verwendung von Schlauchbahnen aus Kunststoff eine Verschweißung oder eine Siegelverbindung durchgeführt worden ist. Auf diese Weise wird verhindert, dass sich die Enden der Schlauchbahnen bei einer noch nicht belastbaren Verbindung wieder von einander lösen.

Bevorzugt werden in der erfindungsgemäßen Vorrichtung Schlauchbahnen mit Seitenfalten verarbeitet. Das Ende der einen Schlauchbahn wird dabei bevorzugt entlang der Innenkanten der Seitenfalten eingeschnitten. Das hat zur Folge, dass, wenn die Vorrichtung nach der EP 1 201 585 A1 zur Verbindung der Enden Schlauchbahnen mit Seitenfalten nutzen würde, sich möglicherweise die Lagen der vorherigen Seitenfalten aufklappen und damit den Verbindungsprozess stören oder sogar verhindern. Die erfindungsgemäße Vorrichtung eignet sich daher besonders für die Verbindung der Enden von Seitenfaltenschläuchen.

Seitenfaltenschläuche, die in den eingangs beschriebenen FFS-Maschinen verarbeitet werden, bestehen häufig aus Kunststoff. Die Enden von Kunststoffschläuchen werden dabei in der Regel durch eine Schweißnaht verbunden. Um zu verhindern, dass die Verschweißung der Lagen der Seitenfalten zu Störungen in der FFS-Maschine führt, sind in einer vorteilhaften Ausführungsform der Erfindung Trennmittel, beispielsweise Trennbleche, vorgesehen, welche in die Seitenfalten einlegbar sind. Weiterhin kann auch ein Innenwerkzeug vorgesehen werden, welches auch die Verschweißung der Außenwandungen verhindert. Die Schweißnaht verläuft bevorzugt quer zur Längsachse der Folienschläuche, wobei die Schweißnaht oder auch Klebenaht unterbrochen sein kann, um ein Austreten der Luft, die bei dem Inkontaktbringen der oberen und der unteren Wand der einen Schlauchbahn mit den Außenwandungen der anderen Schlauchbahn eingeschlossen werden kann, zu ermöglichen. Auch andere Fügenähte, beispielsweise Klebenähte, können zur Ermöglichung des Luftaustritts unterbrochen sein.

Weitere vorteilhafte Ausführungsformen der Erfindung sind den weiteren Unteransprüchen und der Zeichnung nebst der zugehörigen gegenständlichen Beschreibung zu entnehmen. Die einzelnen Figuren der Zeichnung zeigen:
- Fig. 1: eine perspektivische Ansicht einer Vorrichtung zum Verbinden der Enden zweier flachliegender Schlauchbahnen,
- Fig. 2: Blick gemäß Schnitt II-II in Fig. 1
- Fig. 3: Darstellung wie in Fig. 2, jedoch mit zusätzlich dargestellten Haltemitteln
- Fig. 4: Seitenansicht der Vorbereitungsstation für das vorauslaufende Ende einer Schlauchbahn
- Fig. 5: Seitenansicht der Vorrichtung vor dem Umklappen der Wände.
- Fig. 6: Seitenansicht der Vorrichtung nach dem Umklappen der Wände
- Fig. 7: Seitenansicht der Vorrichtung während des Verschweißens der Enden beider Schlauchbahnen.

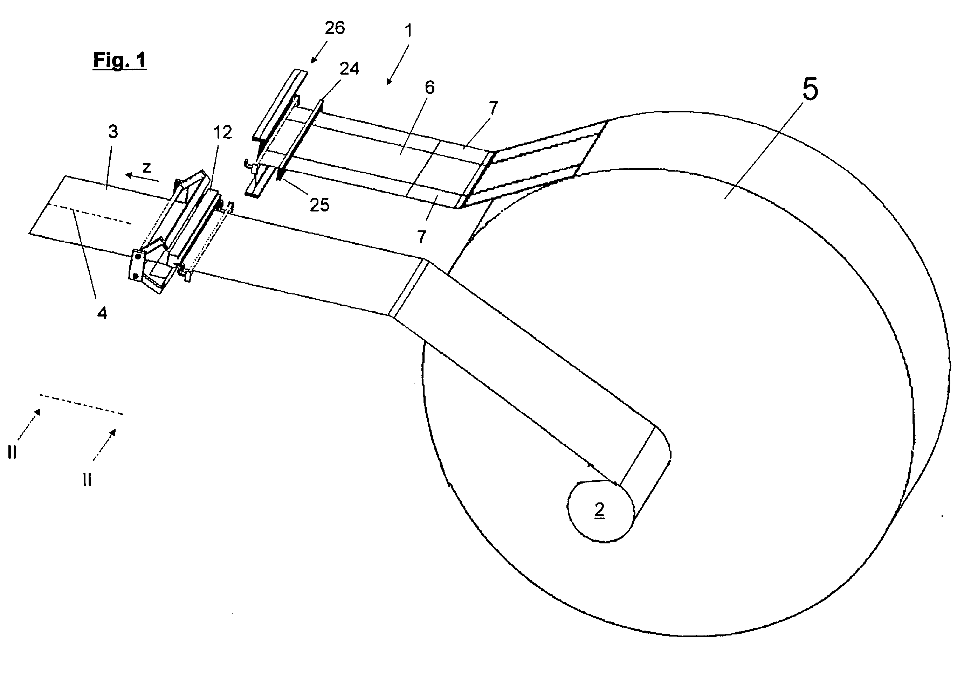

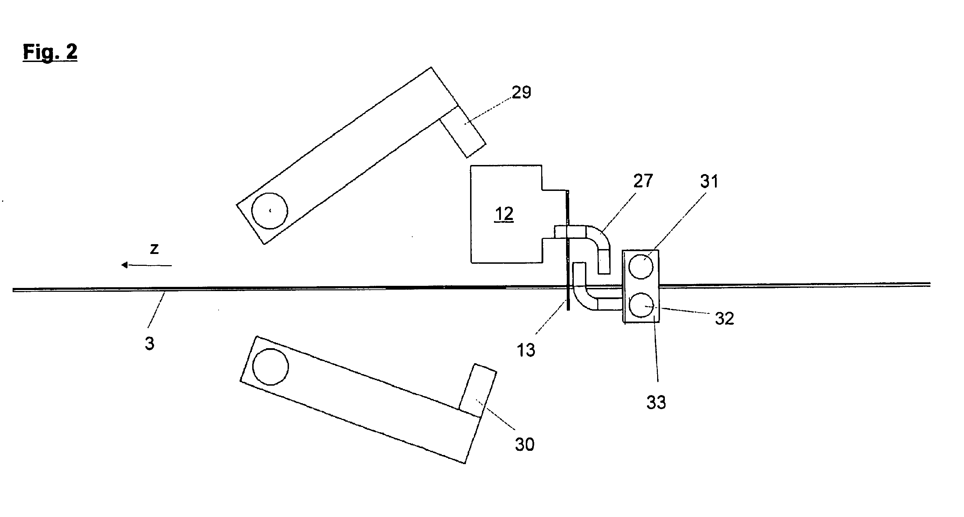

Die Figuren 1 und 2 zeigen eine erfindungsgemäße Vorrichtung 1, wobei lediglich einige der für die Herstellung der Verbindung notwendigen Bauteile dargestellt sind. Gezeigt ist ein Wickel 2, von dem eine Schlauchbahn 3 abgezogen und in der Transportrichtung z, welche entlang der Längsachse 4 der Schlauchbahn 3 verläuft, einer Schlauchbahnen verarbeitenden Maschine zugeführt wird. Die Schlauchbahn 3 wird dabei unter anderem zwischen zwei Rollen 31 und 32 hindurch geführt, welche in zwei seitlichen Platten drehbar gelagert sind, von denen die in Richtung des Betrachters gesehen vordere Platte 33 dargestellt ist. Der Wickel 2 stützt sich auf einen nicht dargestellten Wagen oder Schlitten ab, der im ebenfalls nicht dargestellten Maschinenrahmen quer zur Längsachse 4 der Schlauchbahn 3 verschiebbar ist. Auf dem Schlitten oder Wagen stützt sich weiterhin der Wickel 5 ab, auf dem eine Schlauchbahn 6 aufgewickelt ist. Bei der Schlauchbahn 6 sind exemplarisch durch weitere Linien Seitenfalten 7 dargestellt.

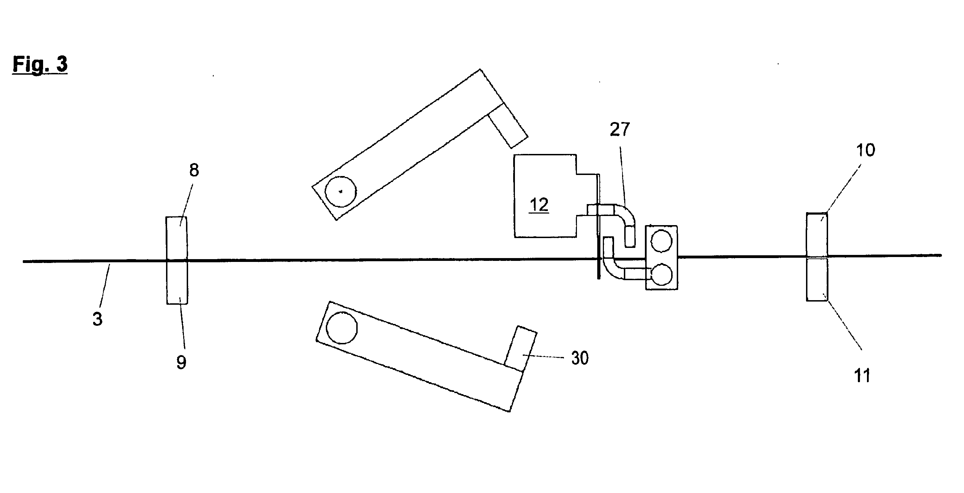

Die auf dem Wickel 2 aufgewickelte Schlauchbahn ist in der dargestellten Situation nahezu vollständig abgewickelt, so dass für die Verarbeitung in der eine Schlauchbahn verarbeitenden Maschine ein neuer Wickel 5 zur Verfügung gestellt werden muss, wobei das Ende der Schlauchbahn 3 mit dem Anfang der Schlauchbahn 6 zu verbinden ist. Wie in der Fig. 3 zu erkennen ist, weist die Vorrichtung 1 dazu ein mit dem Maschinenrahmen verbundenes Paar von Klemmbacken 8, 9 auf, welche aufeinander zu bewegt werden können und mit denen die Schlauchbahn 3 festgehalten werden kann. Ein weiteres Paar von Klemmbacken 10, 11 ist mit dem Wagen oder Schlitten verbunden und klemmt ebenfalls die Schlauchbahn zwischen sich ein. Zwischen diesen Klemmbackenpaaren ist ein Messerträger 12 angeordnet, der ein Messer 13 trägt, mit welchem die Schlauchbahn 3 quer zu deren Längsachse 4 durchgetrennt wird.

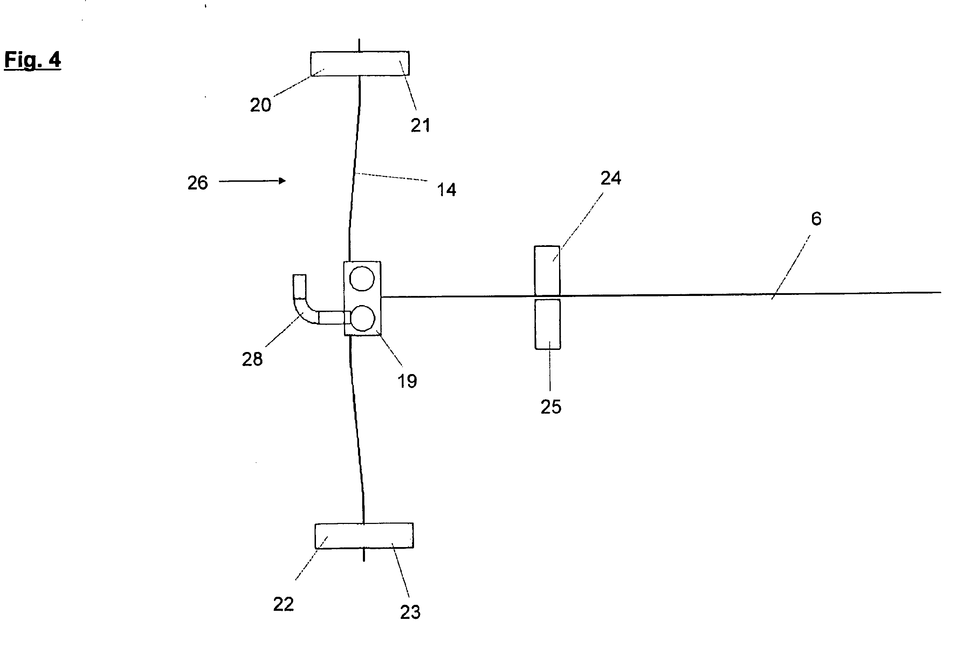

Zu diesem Zeitpunkt befindet sich die Schlauchbahn 6 in Warteposition für den Verbindungsvorgang der beiden Enden, wie es in der Fig. 4 dargestellt ist. Das vorauslaufende Ende 26 der Schlauchbahn 6 ist im Bereich der Seitenkanten eingeschnitten, so dass dieses Ende 26 aus einer oberen Wand 14 und einer unteren Wand 15 besteht. Die obere Wand 14 und die untere Wand 15 umschlingen teilweise die als Umlenkmittel dienenden Rollen 16 respektive 17, welche in Seitenplatten drehbar gelagert sind. Die Wände 14 und 15 werden zusätzlich mittels Klemmbackenpaaren 20, 21 und 22, 23 gehalten, so dass sie sich im Wesentlichen in einer Ebene erstrecken, die orthogonal zur Längsachse der Schlauchbahn 6 verläuft. Die Schlauchbahn 6 ist zusätzlich durch ein Klemmbackenpaar 24, 25 arretiert.

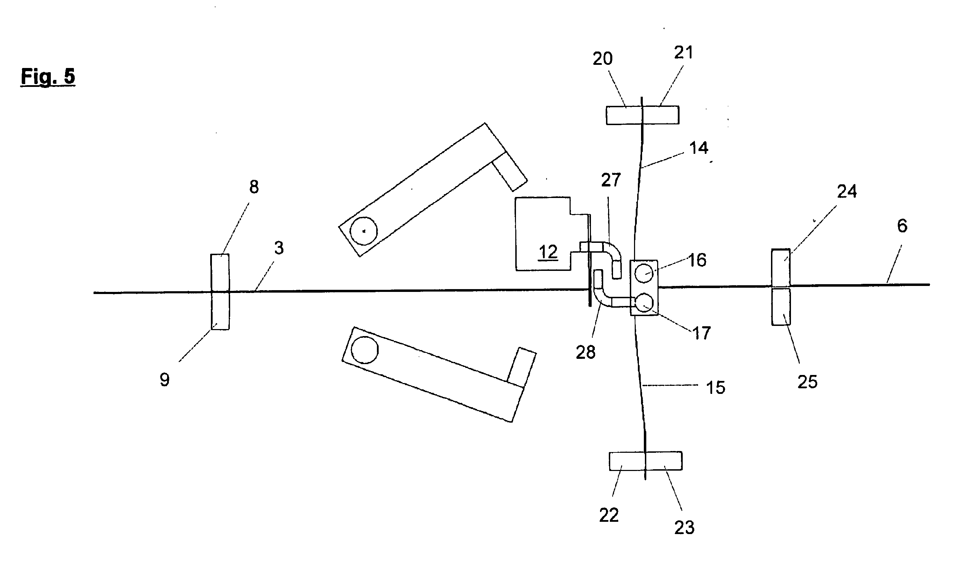

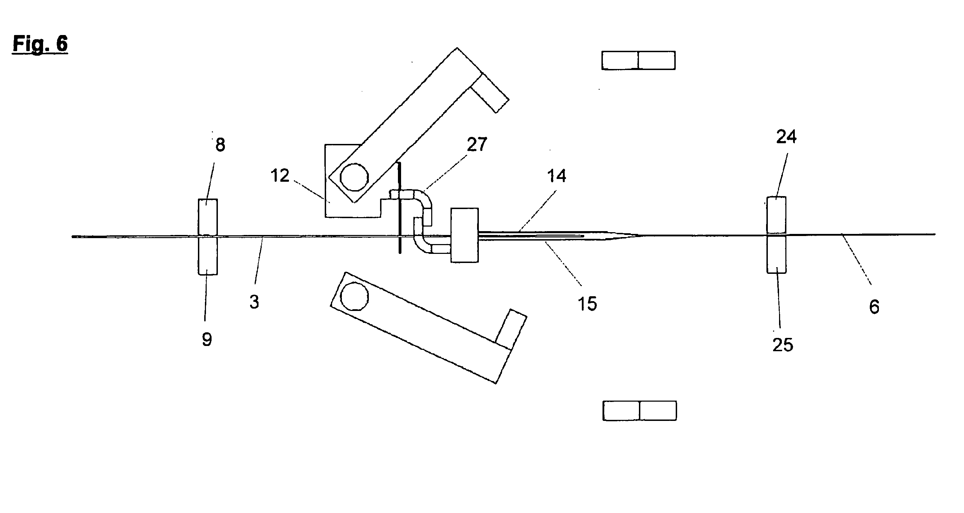

Nachdem die Schlauchbahn 3 abgeschnitten wurde, wird der Wagen oder Schlitten so verschoben, dass die Längsachsen der Schlauchbahnen 3 und 6 miteinander fluchten. Diese Situation wird in Fig. 5 gezeigt. Durch die Querverschiebung des Wagens oder des Schlittens in die beschriebene Position gelangen die an dem Messerträger 12 angeordneten Haken 27 und die an den Platten 18, 19 angeordneten Haken 28 in eine Position, in der die Haken 27, 28 ineinander greifen können. Nun wird der Messerträger 12, welcher verschiebbar in dem Maschinenrahmen gelagert ist, in Richtung der Längsachse 4 der Schlauchbahn 3, beispielsweise durch die Einwirkung eines Pneumatikzylinders, verschoben und nimmt dabei die Platten 18, 19 und damit die Rollen 16 und 17 mit. Währenddessen rollen die Wände 14 und 15 um die als Umlenkmittel dienenden Rollen 16 und 17 ab und werden durch diese Rollen auf die Außenwandungen der Schlauchbahn 3 gelegt beziehungsweise an diese angedrückt. An dieser Stelle sei nochmals angemerkt, dass anstelle der Rollen auch eine Blechplatte mit einem Schlitz vorgesehen sein kann, wobei die Begrenzungskanten des Schlitzes die Funktion der Rollen übernehmen. Die Klemmbacken 20, 21 und 22, 23 halten die Wände 14, 15 zwar zunächst in der in der Fig. 4 dargestellten Position, jedoch beaufschlagen die Klemmbacken die Wände nur mit einer solchen Kraft, dass einer Herausziehen der Wände aus den Klemmbackenspalten möglich ist. Die Verschiebung des Messerträgers 12 erfolgt, bis die in der Fig. 6 dargestellte Betriebsstellung erreicht ist, in der die Rollen 16, 17 noch in Kontakt mit den Wänden 14, 15 stehen. Nicht dargestellte Trennbleche können während des nun folgenden Schweißvorganges in die Seitenfalten 7 eingeschoben sein, damit deren einzelnen Lagen nicht verschweißt werden. Bevorzugt verbleiben die Trennbleche ständig innerhalb der Seitenfalten, so dass sie zusätzliche Führungs- und Stabilisierungsmittel darstellen, wenn die Schlauchbahn von dem Wickel abgezogen wird.

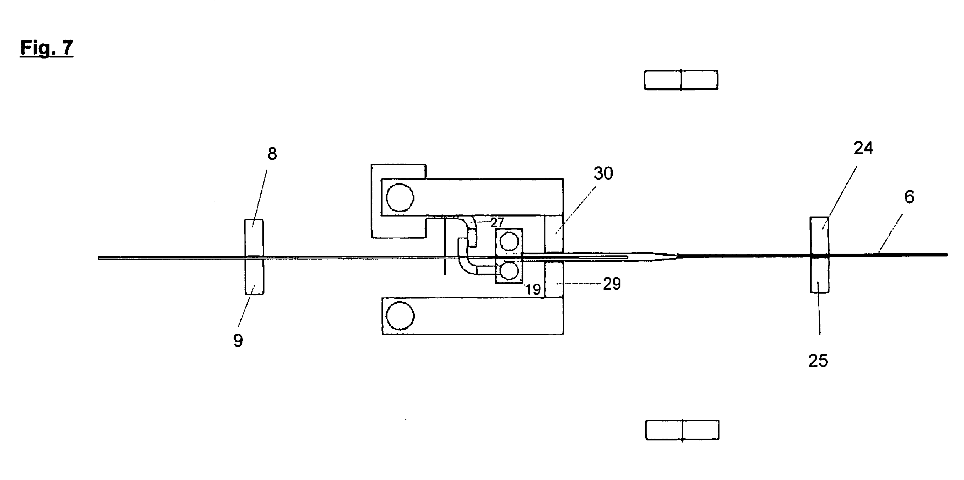

Nun werden, wie es in der Fig. 7 dargestellt ist, Schweißbalken 29, 30, die über schwenkbare Arme im Maschinengestell gelagert sind, auf den Überlappungsbereich der Enden der Schlauchbahnen abgesenkt und anschließend die Lagen des Überlappungsbereiches miteinander verschweißt. Anstelle zweier Schweißbalken kann auch ein einziger Schweißbalken vorgesehen sein, der mit einer geeigneten Gegenlage zusammenwirkt, um die Schweißung durchzuführen.

Nach dem Verschweißen werden die Schweißbalken 29, 30 zurückgeschwenkt, und der Messerträger 12 gemeinsam mit den Rollen 16, 17 wieder in ihre Ausgangsstellungen zurückbewegt. Dazu können beispielsweise die Seitenplatten 18, 19 mit einer Federkraft beaufschlagt sein. Schließlich werden die Klemmbackenpaare 8, 9 und 24, 25 von den Schlauchbahnen entfernt, so dass die die Schlauchbahnen verarbeitende Maschine nunmehr mit der Schlauchbahn 6 versorgt wird. Der Wickel 2 kann nun durch einen neuen, vollen Wickel ersetzt werden, wobei der Anfang der auf ihm aufgewickelten Schlauchbahn in eine der in der Fig. 4 dargestellten Warteposition gebracht werden kann. Sobald sich die Schlauchbahn 6 des Wickels 5 vollständig oder nahezu abgewickelt ist, kann abermals die beschriebene Verbindung der beiden Enden der Schlauchbahnen durchgeführt werden.

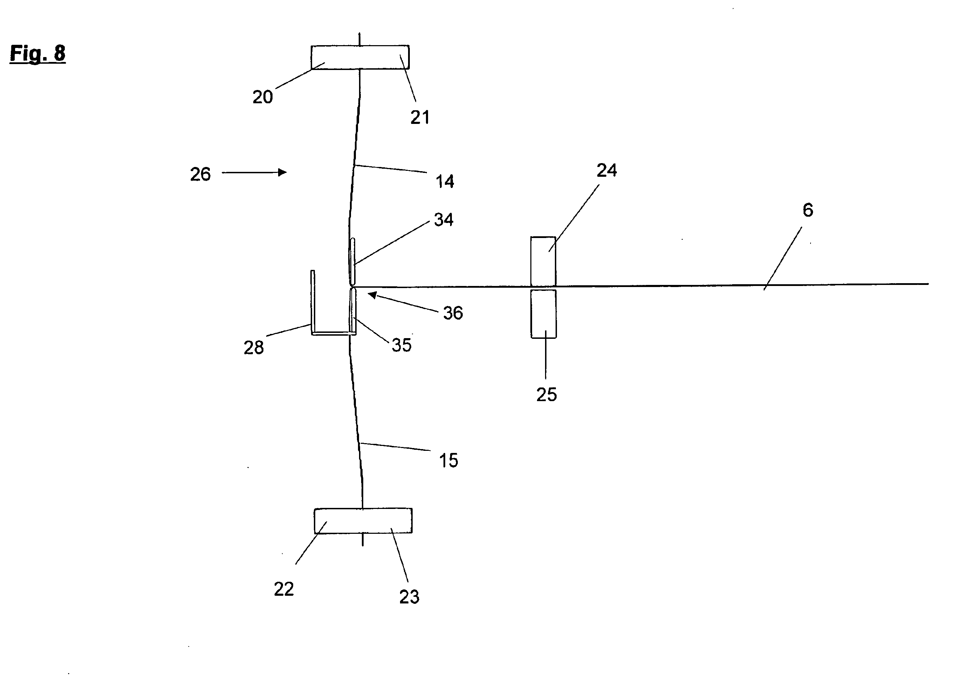

Die Figur 8 zeigt eine alternative Ausführungsform einer erfindungsgemäßen Vorrichtung. Die obere Wand 14 und untere Wand 15 werden in diesem Fall nicht durch Rollen umgelenkt, sondern an den Kanten der Blechstreifen 34 und 35, welche einen Spalt 36 begrenzen, durch welchen 36 die Schlauchbahn 6 geführt wird. Die Blechstreifen sind durch nicht gezeigte Verbindungselemente miteinander verbunden Die Blechstreifen 35, 36 und die Verbindungselemente können Bestandteile einer einstückigen Blechplatte sein. An dem unteren Blechstreifen 35 ist der Haken 28 angeordnet. Wird eine einstückige Blechplatte verwendet, bietet es sich an, auch die Haken und Blechplatte einstückig auszubilden, wobei Bereiche der Blechplatte durch einfaches Abkanten zu Haken 28 geformt werden können. Die an dem Spalt 36 angrenzenden Kanten der Blechstreifen 34 und 35 sind vorzugsweise abgerundet, um die obere und untere Wand 14, 15 möglichst beschädigungsfrei führen zu können.

Abschließend ist zu bemerken, dass die beschriebene Ausführungsform der vorliegenden Erfindung gegenüber der in der EP 1 201 585 A1 dargestellten Vorrichtung eine erheblich vereinfachte Konstruktion darstellt und daher kostengünstiger, weniger wartungsintensiv und weniger störanfällig ist. Der Grund dafür ist in der folgenden Tatsache zu suchen: Bei der in der EP 1 201 585 A1 dargestellten Vorrichtung wird das Ende der alten Schlauchbahn quer zu deren Förderrichtung verschoben. Um aber eine Bewegung des Endes der alten Schlauchbahn quer zu deren Förderrichtung zu ermöglichen, sind verschiedene Umlenkmittel notwendig. Zunächst ist eine diagonale Umlenkstange oder -rolle vorgesehen, um die Schlauchbahn in die Bewegungsrichtung des Riemens umlenken zu können. Weiterhin sind mehrere Umlenkmittel vorgesehen, die einen Bahnspeicher bilden, um einen Längenausgleich der Schlauchbahn bei der Querbewegung zu ermöglichen. Der Nachteil einer solchen Vorrichtung liegt in seinem komplizierten konstruktiven Aufbau, der in der Anschaffung teuer und im Betrieb wartungsintensiv und störanfällig ist. Bei der beschriebenen Ausführungsform der vorliegenden Erfindung wird vielmehr der neue Wickel in die Abwickelposition verschoben, während die Schlauchbahn, welche der die Schlauchbahn verarbeitenden Maschine zugeführt wird, in einer stationären Position verbleibt, so dass die Umlenkmittel zum Längenausgleich entfallen können. Während die in den Figuren gezeigten Ausführungsbeispiele zwei Wickel zeigen, können in einer weiteren Ausführungsform der vorliegenden Erfindung auch mehr als zwei Wickel in Richtung der Wickelachsen aufeinander abfolgen.

| **Bezugszeichenliste** | |
|---|---|
| 1 | Vorrichtung zum Verbinden der Enden zweier Schlauchbahnen |
| 2 | Wickel |
| 3 | Schlauchbahn |
| 4 | Längsachse der Schlauchbahn |
| 5 | Wickel |
| 6 | Schlauchbahn |
| 7 | Seitenfalte |
| 8 | Klemmbacke |
| 9 | Klemmbacke |
| 10 | Klemmbacke |
| 11 | Klemmbacke |
| 12 | Messerträger |
| 13 | Messer |
| 14 | obere Wand |
| 15 | untere Wand |
| 16 | Rolle |
| 17 | Rolle |
| 18 | Seitenplatte |
| 19 | Seitenplatte |
| 20 | Klemmbacke |
| 21 | Klemmbacke |
| 22 | Klemmbacke |
| 23 | Klemmbacke |
| 24 | Klemmbacke |
| 25 | Klemmbacke |
| 26 | vorauslaufendes Ende der Schlauchbahn 6 |
| 27 | Haken |
| 28 | Haken |
| 29 | Schweißbalken |
| 30 | Schweißbalken |
| 31 | Rolle |
| 32 | Rolle |
| 33 | Platte |
| 34 | Blechstreifen |
| 35 | Blechstreifen |
| 36 | Spalt |
| z | Transportrichtung der Schlauchbahnen |

## Patentansprüche

1. Vorrichtung (1) zum Verbinden der Enden zweier flachliegender Schlauchbahnen (3,6), insbesondere von Schlauchbahnen mit Seitenfalten (7), von denen das Ende einer der Schlauchbahnen (6) in seinen Seitenbereichen Schnitte aufweist, welche die obere (14) und die untere (15) Wand des Endes (26) dieser Schlauchbahn (6) voneinander trennen, wobei die Vorrichtung (1) die folgenden Merkmale umfasst:
- Mittel zum Führen (16,17,31,32,34,35) der oberen (14) und der unteren (15) Wand des Endes der einen Schlauchbahn (6), mit welchen die obere (14) und untere (15) Wand mit Bereichen der Wandungen des Endes der anderen Schlauchbahn (3) in Kontakt bringbar sind,
- Mittel zum Verbinden (28,30) der oberen (14) und unteren (15) Wand des Endes (26) der einen Schlauchbahn (6) mit Bereichen der Wandungen des Endes der anderen Schlauchbahn (3),
wobei die obere (14) und die untere (15) Wand des Endes (26) der einen Schlauchbahn (6) durch Mittel zum Führen (16,17,31,32,34,35) zumindest teilweise in Richtung der Längsachse (4) der Schlauchbahnen (3,6) bewegbar sind,
**gekennzeichnet durch**
Haltemittel (8-11,24,25), welche die Schlauchbahnen (3,6) und/oder Teile davon (14,15) in ortsfesten Positionen halten, wenn die obere (14) und die untere (15) Wand bewegt werden.

2. Vorrichtung nach dem vorstehenden Anspruch,
**dadurch gekennzeichnet, dass**
die Mittel zum Führen (16,17,31,32,34,35) Umlenkmittel umfassen, mit welchen (16,17,31,32,34,35) die obere (14) und die untere (15) Wand des Endes der einen Schlauchbahn auf die Außenwandungen des Endes der anderen Schlauchbahn aufbringbar sind und welche (16,17,31,32,34,35) parallel zur Längsachse der Schlauchbahnen bewegbar sind.

3. Vorrichtung nach vorstehendem Anspruch,
**dadurch gekennzeichnet, dass**
die Umlenkmittel ein Paar von Blechen (34,35) oder Platten sind, die einen Spalt (36) begrenzen, durch welchen (36) die obere (14) und die untere (15) Wand geführt werden.

4. Vorrichtung nach Anspruch 2,
**dadurch gekennzeichnet, dass**
die Umlenkmittel Rollen (16,17,31,32) oder Walzen sind, deren Drehachse quer zur Längsrichtung der Schlauchbahnen und parallel zu der durch die Schlauchbahnen definierten Ebene verlaufen.

5. Vorrichtung nach einem der vorstehenden Ansprüche,
**dadurch gekennzeichnet, dass**
die Mittel zum Führen (16,17,31,32,34,35) einen Messerträger (12) umfassen, welcher (12) ein Messer (13) zum Querschneiden einer Schlauchbahn trägt und welcher (12) in Längsrichtung der Schlauchbahnen bewegbar ist.

6. Vorrichtung nach vorstehendem Anspruch,
**dadurch gekennzeichnet, dass**
der Messerträger (12) in Wirkverbindung mit den Umlenkmittel (16,17,34,35) bringbar ist, so dass die Umlenkmittel durch die Bewegung des Messerträgers (12) bewegbar sind.

7. Vorrichtung nach einem der vorstehenden Ansprüche,
**dadurch gekennzeichnet, dass**
mit den Mitteln zum Führen (16,17,31,32,34,35) die obere (14) und untere (15) Wand des Endes der einen Schlauchbahn in Kontakt mit Bereichen des Endes der anderen Schlauchbahn haltbar ist, bis die Enden beider Schlauchbahnen verbunden sind.

8. Vorrichtung nach vorstehendem Anspruch,
**gekennzeichnet durch**
Trennmittel, beispielsweise Trennbleche, welche in die Seitenfalten einlegbar sind.

9. Vorrichtung nach einem der vorstehenden Ansprüche,
**dadurch gekennzeichnet, dass**
die Mittel zum Verbinden zumindest eine Schweißbacke (29, 30) umfasst, mit welchen Bestandteile der Schlauchbahnen (3, 6) mit Wärme beaufschlagbar sind.

10. Verfahren zum Verbinden der Enden zweier flachliegender Schlauchbahnen (3,6), von denen das Ende eines der Schlauchbahnen in seinen Seitenbereichen Schnitte aufweist, welche die obere (14) und die untere (15) Wand des Endes dieser Schlauchbahn voneinander trennen, wobei das Verfahren die folgenden Merkmale umfasst:
- Einbringen des Endes der anderen Schlauchbahn (3) zwischen die obere (14) und der untere (15) Wand der einen Schlauchbahn (6),
- Verbinden der oberen (14) und unteren (15) Wand des Endes der einen Schlauchbahn (3) mit Bereichen der Wandungen des Endes der anderen Schlauchbahn (6),
wobei die obere (14) und die untere (15) Wand des Endes der einen Schlauchbahn (6) zumindest teilweise in Richtung der Längsachse (4) der Schlauchbahnen (3,6) bewegt werden,
**dadurch gekennzeichnet, dass**
die Schlauchbahnen (3,6) und/oder Teile davon (14,15) durch Haltemittel (8-11,24,25) in ortsfesten Positionen gehalten werden, wenn die obere (14) und die untere (15) Wand bewegt werden.

## Claims

1. Device (1) for the connection of the ends of two flat lying tube webs (3, 6), especially of tube webs with side gussets (7), the end of one of the tube webs (6) comprises of cuts in its final section which separate the upper 814) and the lower (15) wall of the end (26) of this tube web (6) from each other, while the device (1) comprises the following characteristics:
- guiding means (16, 17, 31, 32, 34, 35) of the upper (14) and the lower (15) wall of the end of the one tube web (6), by means of which the upper (14) and the lower (15) wall can be brought into touch with sections of the walls of the end of the other tube web (3),
- means for the connection (28, 30) of the upper (14) and the lower (15) wall of the end (26) of the one tube web (6) to sections of the walls of the end of the other tube web (3),
whereby the upper (14) and the lower (15) wall of the end (26) of the one tube web (6) are at least partly movable by means for the guiding (16, 17, 31, 32, 34, 35) into the direction of the longitudinal axis (4) of the tube webs (3, 6),
**characterized by**
holding means (8 - 11, 24, 25) which keep the tube webs (3, 6) and/or parts of them (14, 15) in stationary positions when the upper (14) and the lower (15) wall is moved.

2. Device according to the preceding claim,
**characterized in that**
the guiding means (16, 17, 31, 32, 34, 35) comprise reversing means by means of which (16, 17, 31, 32, 34, 35) the upper (14) and the lower (15) wall of the end of the one tube web can be brought to the outer walls of the end of the other tube web and which (16, 17, 31, 32, 34, 35) are movable parallel to the longitudinal axis of the tube webs.

3. Device according to the preceding claim,
**characterized in that**
the reversing means are a pair of sheets (34, 35) or plates limiting a gap (36) through which (36) the upper (14) and the lower (15) wall is guided.

4. Device according to claim 2,
**characterized in that**
the reversing means are reels (16, 17, 31, 32) or rollers, the pivot of which runs across the longitudinal direction of the tube webs and parallel to the level defined by the tube webs.

5. Device according to one of the preceding claims,
**characterized in that**
the guiding means (16, 17, 31, 32, 34, 35) comprise a knife holder (12) holding (12) a knife (13) for the cross cutting of a tube web and which (12) is movable in longitudinal direction of the tube webs.

6. Device according to the preceding claim,
**characterized in that**
the knife holder (12) can be brought into operative connection with the reversing means (16, 17, 34, 35) so that the reversing means are movable by the movement of the knife holder (12).

7. Device according to one of the preceding claims,
**characterized in that**
by means of the guiding means (16, 17, 31, 32, 34, 35), the upper (14) and lower (15) wall of the end of the one tube web is supportable and in contact to sections of the end of the other tube web until the end of both tube webs are connected.

8. Device according to the preceding claim,
**characterized by**
parting compounds, e. g. separating sheets, which can be inserted into the side gussets.

9. Device according to one of the preceding claims,
**characterized in that**
the connection means comprise at least one sealing jaw (29, 30) by means of which elements of the tube webs (3, 6) can be heated.

10. Process for the connection of the ends of two flat lying tube webs (3, 6), especially of tube webs with side gussets (7), the end of one of the tube webs (6) comprises of cuts in its final section which separate the upper 814) and the lower (15) wall of the end (26) of this tube web (6) from each other, while the device (1) comprises the following characteristics:
- inserting of the end of the other tube web (3) between the upper (14) and the lower (15) wall of the one tube web (6),
- connecting of the upper (14) and the lower (15) wall of the end of the one tube web (3) with sections of walls of the end of the other tube web (6), whereby the upper (14) and the lower (15) wall of the end of the one tube web (6) are moved partly in direction of the longitudinal axis (4) of the tube webs (3, 6),
**characterized in that**
the tube webs (3, 6) and/or parts of it (14, 15) are kept in stationary positions by holding means (8 -11, 24, 25) when the upper (14) and the lower (15) wall is moved.

## Revendications

1. Dispositif (1) pour relier les extrémités de deux bandes de tuyau planes (3, 6), en particulier de bandes de tuyau avec des plis latéraux (9), dont l'extrémité d'une des bandes de tuyau (6) présente dans ses zones latérales des coupes qui séparent les parois supérieure (14) et inférieure (15) de l'extrémité (26) de cette bande de tuyau (6) l'une de l'autre, où le dispositif (1) comprend les caractéristiques suivantes:
- des moyens pour guider (16, 17, 31, 32, 34, 35) les parois supérieure (14) et inférieure (15) de l'extrémité d'une bande de tuyau (6), au moyen desquels les parois supérieure (14) et inférieure (15) peuvent être amenées en contact avec des zones des parois de l'extrémité de l'autre bande de tuyau (3),
- des moyens pour relier (28, 30) les parois supérieure (14) et inférieure (15) de l'extrémité (26) d'une bande de tuyau (6) à des zones des parois de l'extrémité de l'autre bande de tuyau (3),
où les parois supérieure (14) et inférieure (15) de l'extrémité (26) d'une bande de tuyau (6) sont déplaçables par des moyens de guidage (16, 17, 31, 32, 34, 35) au moins partiellement dans la direction de l'axe longitudinal (4) des bandes de tuyau (3, 6),
**caractérisé par**
des moyens de retenue (8-11, 24, 25) qui retiennent les bandes de tuyau (3, 6) et/ou des parties de celles-ci (14, 15) dans des positions fixes lorsque les parois supérieure (14) et inférieure (15) sont déplacées.

2. Dispositif selon la revendication précédente, **caractérisé en ce que** les moyens de guidage (16, 17, 31, 32, 34, 35) comprennent des moyens de renvoi au moyen desquels (16, 17, 31, 32, 34, 35) les parois supérieure (14) et inférieure (15) de l'extrémité d'une bande de tuyau peuvent être appliquées aux parois extérieures de l'extrémité de l'autre bande de tuyau et qui (16, 17, 31, 32, 34, 35) sont déplaçables parallèlement à l'axe longitudinal des bandes de tuyau.

3. Dispositif selon la revendication précédente, **caractérisé en ce que** les moyens de renvoi sont une paire de tôles (34, 35) ou de plaques, qui délimitent une fente (36) à travers laquelle (36) sont guidées les parois supérieure (14) et inférieure (15).

4. Dispositif selon la revendication 2, **caractérisé en ce que** les moyens de renvoi sont des rouleaux (16, 17, 31, 32) ou des cylindres dont les axes de rotation s'étendent transversalement à la direction longitudinale des bandes de tuyau et parallèlement au plan défini par les bandes de tuyau.

5. Dispositif selon l'une des revendications précédentes, **caractérisé en ce que** les moyens de guidage (16, 17, 31, 32, 34, 35) comprennent un porte-couteau (12) qui supporte un couteau (13) pour une coupe transversale d'une bande de tuyau et qui (12) est déplaçable dans la direction longitudinale des bandes de tuyau.

6. Dispositif selon la revendication précédente, **caractérisé en ce que** le porte-couteau (12) peut être amené en liaison fonctionnelle avec les moyens de renvoi (16, 17, 34, 35) de sorte que les moyens de renvoi sont déplaçables par le déplacement du porte-couteau (12).

7. Dispositif selon l'une des revendications précédentes, **caractérisé en ce qu'**avec les moyens de guidage (16, 17, 31, 32, 34, 35) les parois supérieure (14) et inférieure (15) de l'extrémité d'une bande de tuyau peuvent être maintenues en contact avec des zones de l'extrémité de l'autre bande de tuyau jusqu'à ce que les extrémités des deux bandes de tuyau soient reliées.

8. Dispositif selon la revendication précédente, **caractérisé par** des moyens de séparation, par exemple des tôles de séparation, qui peuvent être placées dans les plis latéraux.

9. Dispositif selon l'une des revendications précédentes, **caractérisé en ce que** les moyens de liaison comprennent au moins une mâchoire de soudage (29, 30) au moyen de laquelle des composants des bandes de tuyau (3, 6) peuvent être chargés en chaleur.

10. Procédé pour relier les extrémités de deux bandes de tuyau planes (3, 6), dont l'extrémité d'une des bandes de tuyau présente dans ses zones latérales des coupes, qui séparent les parois supérieure (14) et inférieure (15) de l'extrémité de cette bande de tuyau l'une de l'autre, le procédé comprenant les caractéristiques suivantes:
- introduire l'extrémité de l'autre bande de tuyau (3) entre les parois supérieure (14) et inférieure (15) d'une bande de tuyau (6),
- relier les parois supérieure (14) et inférieure (15) de l'extrémité d'une bande de tuyau (3) à des zones des parois de l'extrémité de l'autre bande de tuyau (6),
où les parois supérieure (14) et inférieure (15) de l'extrémité d'une bande de tuyau (6) sont déplacées au moins partiellement dans la direction de l'axe longitudinal (4) des bandes de tuyau (3, 6), **caractérisé en ce que** les bandes de tuyau (3, 6) et/ou des parties de celles-ci (14, 15) sont maintenues par des moyens de retenue (8-11, 24, 25) dans des positions fixes lorsque les parois supérieure (14) et inférieure (15) sont déplacées.
